## Europäisches Patentamt

## European Patent Office

## Office européen des brevets

(11) Publication number: **0 152 195**
A2

# (12) EUROPEAN PATENT APPLICATION

(21) Application number: **85300428.1**

(22) Date of filing: **23.01.85**

(51) Int. Cl.⁴: **B 62 D 33/04**

(30) Priority: **08.02.84 GB 8403357**

(43) Date of publication of application:
**21.08.85 Bulletin 85/34**

(84) Designated Contracting States:
**DE FR GB NL**

(71) Applicant: **BOALLOY LIMITED**
**Radnor Park Trading Estate West Heath**
**Congleton Cheshire CW12 4QA(GB)**

(72) Inventor: **Broadbent, Edward Gerald**
**91 Park Lane**
**Sandbach Cheshire, CW11 9EE(GB)**

(74) Representative: **Massey, Alexander et al,**
**MARKS & CLERK Scottish Life House Bridge Street**
**Manchester, M3 3DP(GB)**

(54) Van bodies.

(57) A curtainsided van body has a low-loading floor and an open side closable by a curtain anchored at one end with an end pole at its free end adapted for location and spigotting in a spool element rotatable by a ratchet tensioner at its lower end to wrap the curtain around the spool element to tension same. A brake or similar is provided to secure the spool element in curtain-tensioning position. The van body is characterised in that the ratchet tensioner is drivingly connected to the spool element by an endless transmission and is operated by an axially split vertical shaft adapted to be rendered rotatably unitary when horizontal tensioning of the curtain is to be effected.

./...

FIG I

## VAN BODIES

This invention relates to van bodies and especially to curtainsided van bodies. The invention is an improvement of modifications of the curtainsided van body disclosed in our United Kingdom Patent Specifications Nos. B1 262 879 and B1 262 880.

This invention is particularly applicable to low-loader road vehicle van bodies or railway freight wagons.

Briefly, with curtainsided van bodies as disclosed in our aforesaid Patent Specifications, the curtain, when drawn across the open side of the van body to close same, is tensioned in the vertical plane by straps freely located in vertical sleeves in the curtain and secured at their tops to runners movable along an overhead track. Each strap at its bottom has a free tail portion out of the pocket threaded through eyelets and through a tensioning device or buckle the tail portion terminating in a rave-engagable hook.

The curtain is anchored at one end of the van body and to tension it, when closed, in the horizontal plane an end pole at the free end of the curtain is located and spigotted within a spool element which is rotated by a manually-operated ratchet tensioner under the van body floor to wrap the curtain around the spool element, a brake or similar being provided releasably to lock the spool element in curtain-tensioning position.

With low-loading van bodies (road or rail) it is not only awkward and sometimes difficult to engage the hooks on the rave but it is also awkward and difficult to operate the ratchet tensioner to the extent it involves the driver or operator having to bend or even kneel down to effect horizontal tensioning.

To overcome the difficulty of engaging the hooks on the rave we have proposed in our copending Patent Application to provide a curtainsided van body comprising an open side closable by a curtain restrained at one end and movable across the open side to close same, the closed curtain being tensionable in the vertical plane by horizontally-spaced vertical straps having bottom tail portions which are threaded through tensioning devices or buckles and which terminate in hooks engagable with the van body rave or bottom rail, the van body being characterised in that the strap tail portions and hooks are restrained into contact with the curtain exterior such that, with the curtain in closed position, release of the tensioning devices allows the hooks to drop clear of the van body rave while engagement thereof elevates the hooks into securing abutment with the van body rave.

With such an arrangement it is not necessary for the driver or operator to bend down to ensure that the hook is aligned for engagement with the van body rave. This is especially important with railway freight wagons where the rave or bottom rail will often be below platform or loading bay level.

If any slight misalignment does occur, the hook can be kicked back into proper alignment with the rave.

The present invention is concerned with solving the same drawback insofar as the horizontal tensioning of the curtain is concerned.

According to the present invention there is provided a curtainsided van body having a low-loading floor and an open side closable by a curtain anchored at one end with an end pole at its free end adapted for location and spigotting in a spool element rotatable by a ratchet tensioner at its lower end to wrap the curtain around the spool element to tension same, a brake or similar being provided to secure the spool element in curtain-tensioning position, the van body being characterised in that the ratchet tensioner is drivingly connected to the spool element by an endless transmission and is operated by an axially split vertical shaft adapted to be rendered rotatably unitary when horizontal tensioning of the curtain is to be effected.

- 4 -

Preferably the endless transmission is an endless chain wrapped around driving and driven sprockets, the latter being connected to the spool element and the former incorporating a ratchet drive or one-way clutch.

Preferably the driving ratchet sprocket is connected to a vertical driving shaft comprising a lower part permanently connected to the ratchet sprocket and an upper part axially slidable on, and rotatable relative to, the lower part, there being driving formations on the shaft parts for engagement to permit unitary rotation of the shaft parts and ratchet sprocket.

Preferably, the lower shaft part has a peripheral driving pin while the upper shaft part has an axial slot at its lower end for engaging the driving pin when horizontal tensioning of the curtain is required.

The upper shaft part is preferably held in a raised position clear of the driving pin when horizontal tensioning is either not required or has been effected.

The upper shaft part is preferably spring-loaded into driving engagement with the lower shaft part.

The upper shaft preferably mounts a rotating lever. Preferably there are two vertically-spaced rotating levers connected to the upper shaft part whereby the ratchet tensioner can be operated at a height convenient to the driver or operator.

The spool element is preferably fast with a toothed boss engagable by a spring-loaded pin or spindle to act as a brake or lock.

The locking pin or spindle is preferably released from the toothed boss by a lever.

A customs sealing plate is preferably provided to secure the locking pin lever against inadvertent tampering when the curtain is in its closed horizontally tensioned position.

An embodiment of the present invention will now be described, by way of example, with reference to the accompanying drawings, in which :-

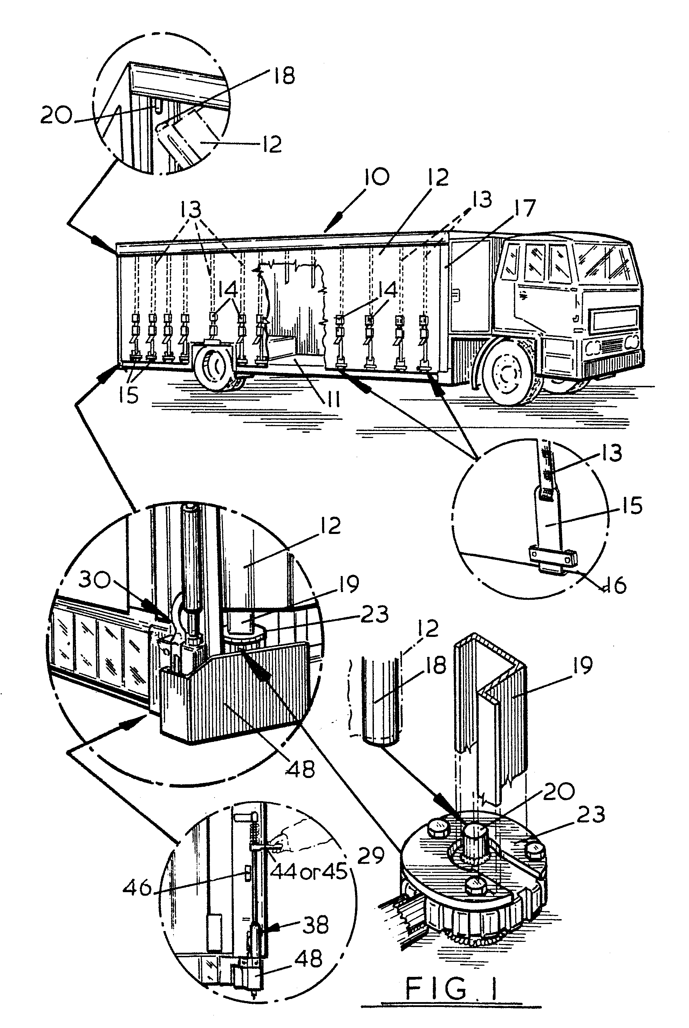

Fig. 1 is a diagrammatic perspective view illustrating a low-loader road vehicle incorporating a curtainsided van body according to the invention;

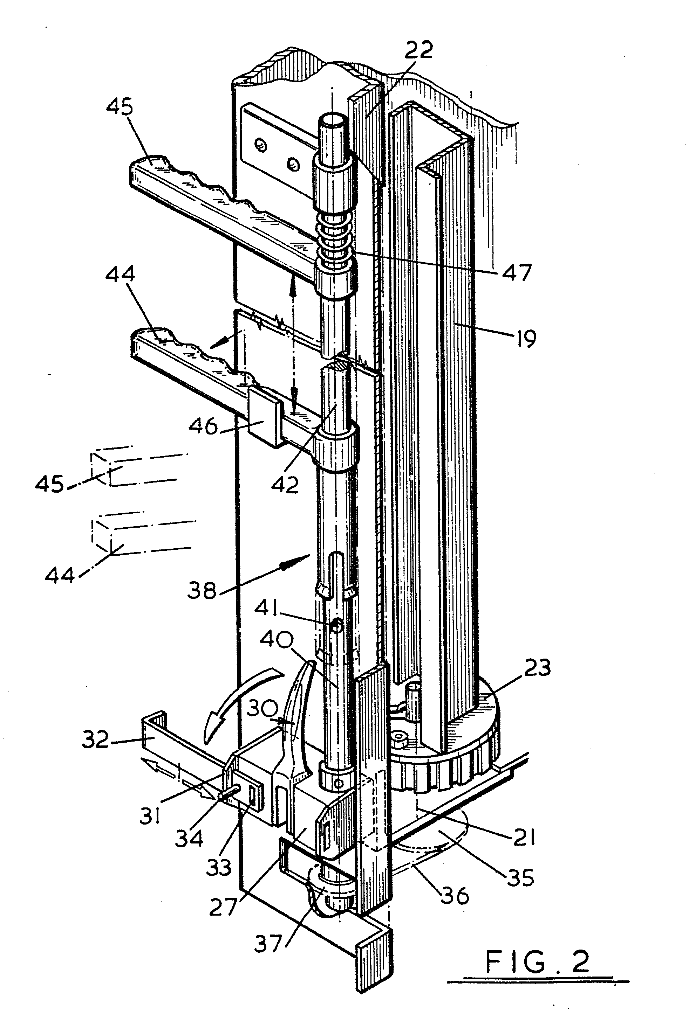

Fig. 2 is a fragmentary perspective view of the ratchet tensioner according to the present invention;

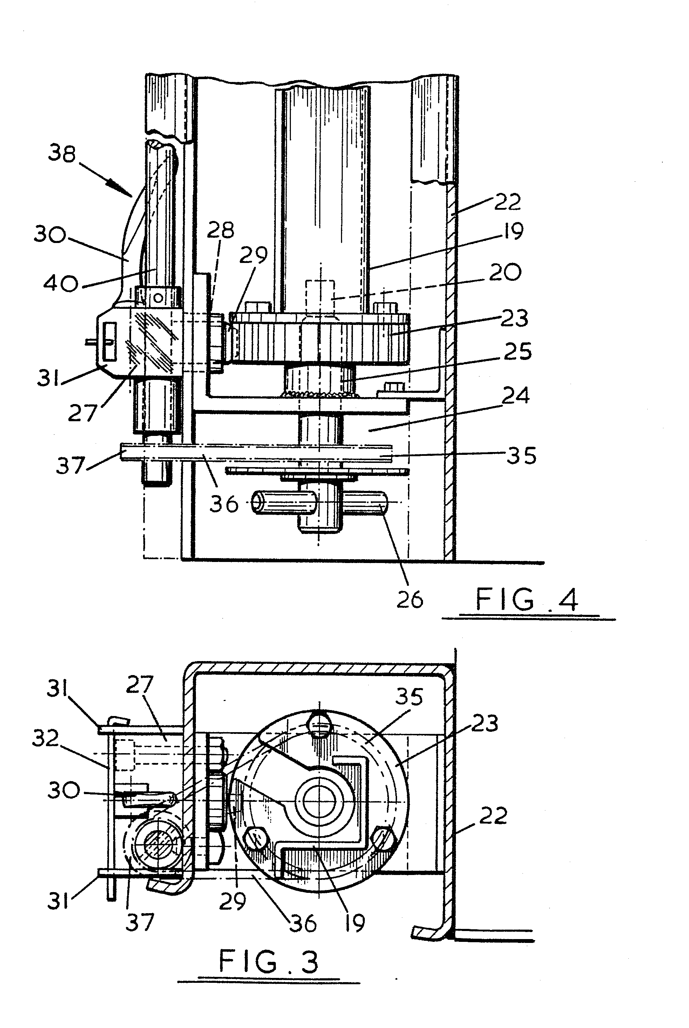

Fig. 3 is a plan view of the lower part of the ratchet tensioner; and

Fig. 4 is a fragmentary side elevation of the lower part of the ratchet tensioner.

The low-loader road vehicle has a van body 10 with a cargo-supporting floor 11 disposed relatively close to the ground.

The van body 10 is open at its two parallel lateral sides each of which is closable by a curtain 12 which can be drawn across the open side.

Each curtain 12 can be vertically tensioned by straps 13, tensioning buckles 14 and hooks 15 engagable on the van body rave 16 as disclosed in our aforesaid copending Patent Application.

Each curtain 12 is anchored at its front end 17 and its free end incorporates an end pole 18. The latter is adapted to be located within a rotatable channel-shaped spool element 19 and be spigotted therein top and bottom as indicated at 20.

The spool element 19 is rotatably mounted on a plate 21 adjacent a corner pillar 22 of the van body 10.

The curtain 12, when being horizontally tensioned, is wrapped around the spool element 19.

The spool element 19 is secured to the top of a peripherally-toothed boss 23 having a vertical spindle 24, whereof the top end constitutes the bottom spigot 20, the spindle 24 being rotatably supported in a bush or bearing 25 on the plate 21 and extending below the latter. It mounts adjacent its lower end a cross handle 26.

To one side of the toothed boss 23 and mounted on the pillar 22 is a casing 27 which mounts a spindle 28 having a nose 29 engagable with the teeth of the boss 23 to lock the latter against rotation. This spindle 28 is spring-loaded towards the toothed

periphery of the boss 23 and is withdrawable therefrom by a pivotal lever 30 carried by the casing 27 and connected to the spindle 28.

The casing 27 has two projecting slotted ears 31, in one of which a customs seal locking plate 32 is permanently slidably mounted. This plate 32 has a slot 33 through which a customs seal (not shown) is fitted when the plate 32 has been passed through the other ear 31. A rod 34 is provided to move the plate 32 to-and-fro.

It will be manifest that with the curtain horizontally tensioned, the lock (spindle 28 and toothed boss 23) applied and the customs seal plate 32 secured, unauthorised access to the interior of the van body 10 cannot be achieved without leaving clear signs of such entry.

According to this invention, the spool element 19 is operated by a ratchet tensioner comprising a sprocket 35 fast with the spindle 24 which is drivingly connected by an endless chain 36 to a smaller-diameter sprocket 37 incorporating a ratchet device or one-way clutch (not shown).

This ratchet sprocket 37 is fast with a vertical shaft 38 rotatably carried in a sleeve 39 forming part of the casing 27.

The vertical shaft 38 comprises a lower part 40 mounting a peripheral driving pin 41, and an upper part 42 rotatably and axially movable relative to the lower part 40 and having an axial slot 43 for engaging around the driving pin 41.

The upper shaft part 42 has fast therewith two vertically-spaced operating levers 44 and 45, say, one metre apart, with the lower lever 44 normally engaged in a bracket 46 on the pillar 22 with the axial slot 43 clear of the driving pin 41.

A spring 47 between the upper operating lever 45 and a bush on the pillar 22 serves to urge the upper shaft part 42 downwards to engage the axial slot 43 around the driving pin 41 thus rendering the shaft parts 40, 42 unitarily rotatable.

In use, the end pole 18 is spigotted top and bottom at 20 into the spool element 19 and the lock is released. The latter is rotated by cross handle 26 to take up curtain slack.

The top shaft part 42 is disengaged by bracket 46 and lowered to engage the axial slot 43 around the driving pin 41. The driver or operator can then, after selecting whichever handle 44, 45 which best suits his position relative to the van body 10, operates the ratchet sprocket 37 to rotate the spool element 19. When the curtain 12 is sufficiently tensioned the lock 28, 23 is operated and the upper shaft part 42 is disengaged from the lower shaft part 40 and is parked in the bracket 46.

To release the curtain 12, the lock 28, 23 is released and the spool element 19 is rotated by cross handle 26 to release the tension. The curtain 12 can then be readily and easily unfurled by hand.

A guard plate 48 is disposed around the sprocket wheels and endless chain.

CLAIMS:

1. A curtainsided van body having a low-loading floor and an open side closable by a curtain anchored at one end with an end pole at its free end adapted for location and spigotting in a spool element rotatable by a ratchet tensioner at is lower end to wrap the curtain around the spool element to tension same, a brake or similar being provided to secure the spool element in curtain-tensioning position, the van body being characterised in that the ratchet tensioner is drivingly connected to the spool element by an endless transmission and is operated by an axially split vertical shaft adapted to be rendered rotatably unitary when horizontal tensioning of the curtain is to be effected.

2. A curtainsided van body as claimed in claim 1, in which the endless transmission is an endless chain wrapped around driving and driven sprockets, the latter being connected to the spool element and the former incorporating a ratchet drive or one-way clutch.

3. A curtainsided van body as claimed in claim 2, in which the driving ratchet sprocket is connected to a vertical driving shaft comprising a lower part permanently connected to the ratchet sprocket and an upper part axially slidable on, and rotatable relative to, the lower part, there being driving formations on the shaft parts for engagement to permit unitary rotation of the shaft parts and ratchet sprocket.

4. A curtainsided van body as claimed in claim 3, in which the lower shaft part has a peripheral driving pin while the upper shaft part has an axial slot at its lower end for engaging the driving pin when horizontal tensioning of the curtain is required.

5. A curtainsided van body as claimed in claim 3 or 4, in which the upper shaft part is held in a raised position clear of the driving pin when horizontal tensioning is either not required or has been effected.

6. A curtainsided van body as claimed in any one of claims 3 to 5, in which the upper shaft part is spring-loaded into driving engagement with the lower shaft part.

7. A curtainsided van body as claimed in any one of claims 3 to 6 in which the upper shaft mounts a rotating lever.

8. A curtainsided van body as claimed in claim 7 in which there are two vertically-spaced rotating levers connected to the upper shaft part whereby the ratchet tensioner can be operated at a height convenient to the driver or operator.

9. A curtainsided van body as claimed in any one of claims 1 to 8 in which the spool element is fast with a toothed boss engageable by a spring-loaded pin or spindle to act as a brake or lock.

10. A curtainsided van body as claimed in claim 9, in which the locking pin or spindle is released from the toothed boss by a lever.

11. A curtainsided van body as claimed in claim 10, in which a customs sealing plate is provided to secure the locking pin lever against inadvertent tampering when the curtain is in its closed horizontally tensioned position.

FIG. 1

0152195

0152195

FIG. 2

0152195

FIG.4

FIG.3